(19) **Europäisches Patentamt**

**European Patent Office**

**Office européen des brevets**

(11) **EP 0 796 299 B1**

(12) **FASCICULE DE BREVET EUROPEEN**

(45) Date de publication et mention
de la délivrance du brevet:
**15.03.2000 Bulletin 2000/11**

(51) Int Cl.⁷: **C09D 151/04**, C09D 163/10,
C09D 4/06, C09D 167/06

(21) Numéro de dépôt: **95940918.6**

(22) Date de dépôt: **06.12.1995**

(86) Numéro de dépôt international:
**PCT/BE95/00113**

(87) Numéro de publication internationale:
**WO 96/17895 (13.06.1996 Gazette 1996/27)**

(54) **PROCEDE DE PROTECTION DE SURFACES CONTRE LES MATIERES CORROSIVES**

VERFAHREN ZUM SCHÜTZEN VON OBERFLÄCHEN GEGEN KORROSIVE SUBSTANZEN

METHOD FOR PROTECTING SURFACES FROM CORROSIVE MATERIALS

(84) Etats contractants désignés:
**DE FR GB IE IT NL SE**

(30) Priorité: **06.12.1994 BE 9401110**

(43) Date de publication de la demande:
**24.09.1997 Bulletin 1997/39**

(73) Titulaire: **Roumieux, Jozef**
**2580 Putte (BE)**

(72) Inventeur: **Roumieux, Jozef**
**2580 Putte (BE)**

(74) Mandataire: **Van Malderen, Joelle**
**Office Van Malderen,**
**Place Reine Fabiola 6/1**
**1083 Bruxelles (BE)**

(56) Documents cités:
**EP-A- 0 294 771**    **EP-A- 0 419 977**
**FR-A- 1 464 503**    **GB-A- 785 032**
**US-A- 3 639 653**

- **DATABASE WPI Section Ch, Week 8222 Derwent Publications Ltd., London, GB; Class A23, AN 82-44872E XP002000107 & JP,A,57 067 618 (MATSUSHITA ELEC WORKS) , 24 April 1982**
- **PATENT ABSTRACTS OF JAPAN vol. 014, no. 192 (C-0711), 19 April 1990 & JP,A,02 036212 (HITACHI CHEM CO LTD), 6 February 1990,**
- **PATENT ABSTRACTS OF JAPAN vol. 008, no. 130 (C-229), 16 June 1984 & JP,A,59 043069 (SHIN NIPPON SEITETSU KK;OTHERS: 01), 9 March 1984,**

## Description

### Objet de l'invention

La présente invention concerne un procédé de protection de surfaces par traitement de celles-ci à l'aide d'une composition leur conférant une bonne résistance aux matières corrosives ou agressives telles que des agents chimiques sous forme liquide, gazeuse ou sous forme de fumée, en particulier les acides forts et faibles, les alcalis, les sels, etc.

Une telle protection peut être appliquée sous forme diluée en primer ou à l'état pâteux sans diluant ou sous forme d'un liant dans un mortier en mélange avec du sable, sur des surfaces de béton, d'amiante-ciment, d'acier, etc.

### Arrière-plan technologique

Après leur application sous une forme essentiellement liquide sur la surface à traiter, les films de protection formés durcissent en formant un feuil de protection.

Pour la plupart des compositions connues, ce durcissement, qui implique généralement des phénomènes de réticulation, entraîne une rétraction qui provoque un défaut d'adhérence au substrat. Des propriétés de dilatation et de rétraction thermiques différentes du feuil de protection et du substrat provoquent également, en service, de nombreuses difficultés de cohésion, pouvant même conduire à une délamination.

De nombreuses exigences sont formulées par les utilisateurs, notamment pour ce qui concerne les propriétés mécaniques (résistance à la compression, à la traction, à l'abrasion, etc.), la résistance thermique, le rapport matière sèche / solvant, la durée de vie et bien entendu également le rapport qualité / prix. La facilité d'application, y compris dans des conditions sévères de température ambiante et d'humidité relative de l'atmosphère, et les risques et dangers lors de l'application, doivent également être pris en considération.

Certaines compositions destinées à des usages différents sont déjà connues.

Le document JP-A-57-67618 décrit une composition de moulage pour le colmatage de composants électroniques :

- 100 parties de polyester insaturé,
- 5-200 part. de styrène,
- 5-100 part. d'un thermoplaste (ABS ou PP) pour compenser la contraction,
- 10-500 part. d'un époxy insaturé pour augmenter l'adhérence; et

le document EP-A-294771 décrit aussi une composition de moulage contenant :

- 100 parties d'un polyester insaturé,
- 5-50 part. d'un polystyrène modifié,
- 30-50 part. styrène,
- 0.1-5 part. d'un initiateur de polymérisation,
- divers additifs parmi lesquels de l'hydrate d'alumine, du ciment et "granules inorganiques".

A priori, rien ne permettait de prévoir que de telles compositions présenteraient des propriétés satisfaisantes pour la protection de surfaces contre les matières corrosives.

### Buts visés par l'invention

La présente invention vise à fournir un procédé répondant à ces exigences, et en particulier vise à proposer la mise en oeuvre de moyens améliorés pour protéger de manière efficace contre des réactifs chimiques, en particulier contre les attaques chimiques, notamment alcalines et surtout acides, des surfaces extérieures et intérieures, notamment des cuves et réservoirs en béton et en acier tels qu'ils sont utilisés généralement dans l'industrie chimique. D'autres applications sont bien entendu également envisageables, telles que les protections d'immeubles.

### Eléments caractéristiques de la présente invention

L'invention concerne un procédé de protection de surfaces contre les matières corrosives, qui repose sur l'utilisation d'une composition constituée d'un copolymère polybutadiène/styrène opaque et résistant aux chocs, en solution dans un solvant réactif, de préférence dans du styrène, qui est mélangé à raison de 1 à 18 parties, et de préférence approximativement 4 parties, en poids d'une résine vinylique ou un polyester non-saturé pour une partie en poids de la solution de polystyrène, en présence d'accélérateurs ou de catalyseurs.

La solution de polybutadiène/styrène dans son solvant est de préférence d'une concentration telle que l'on obtienne une fluidité convenable (sirupeuse). De préférence, le rapport polystyrène / styrène est de l'ordre de 20 / 70.

De préférence, on utilisera des catalyseurs du type des oxydes organiques tels que le peroxyde de méthyl-éthyl-cétone (MEKP) qui sont bien solubles dans le styrène et dans la plupart des autres solvants entrant en considération dans la technique selon l'invention.

Le copolymère polybutadiène/styrène, dans ces conditions, se lie aux radicaux libres de la résine vinylique, en formant des chaînes de longueur telle qu'elles servent d'armature dans une matrice constituée par la base de résines, ce qui a pour conséquence que la rétraction lors du durcissement devient pratiquement nulle ou du moins négligeable, par exemple de l'ordre de 1 %.

De plus, dans ces conditions, les valeurs de dilatation thermique du revêtement sont très faibles set pratiquement proches de celles du béton. Les propriétés de résistance mécanique et chimique, notamment en cas d'exposition à des agents chimiquement agressifs, en particulier acides ou basiques, sont également remarquables.

La plupart des copolymères polybutadiène/styrène du commerce, en particulier ceux présentant une résistance aux chocs améliorée, d'une masse moléculaire moyenne $M_n$ de l'ordre de 100000 à 250000, du type HI Polystyrène 34400, peuvent être utilisés.

Ils sont dissous de préférence dans du styrène jusqu'à l'obtention d'un état correspondant à la consistance d'une matière sirupeuse et mélangés à la résine vinylique ou un polyester non-saturé. Ces derniers composés sont de préférence des produits choisis parmi les composés :

- résines de type polyester dérivées d'orthophtalate ou d'isophtalate;
- esters époxyvinyliques, notamment les esters vinyliques à base de Novolac-époxy ou bisphénol-A-époxy ou encore bisphénol-A-époxy bromé et caoutchouc modifié - époxy.

Des produits de ce type peuvent être obtenus dans le commerce sous forme de compositions du type DERAKANE® de la société Dow. Il s'agit notamment de DERAKANE® de la série 470, 411, 441-400 et compatibles.

La quantité de catalyseur, en particulier, est fonction de sa nature et des quantités et rapports pondéraux des constituants précités. Elle peut être déterminée aisément par le praticien par quelques essais d'orientation.

Pour la mise en oeuvre du procédé, on réalise un "mortier" en y ajoutant un additif tel que du sable. En fonction de la nature du sable ajouté et de l'épaisseur d'application, la proportion de sable utilisée peut varier de 1 à 20 parties, et de préférence 4 à 9 parties de sable, pour une partie de la composition selon l'invention. D'autres additifs peuvent convenir, notamment des dérivés des mats ou des paillettes (flakes) de verre. En plus, l'addition d'une certaine quantité d'un liant hydraulique ou ciment est possible mais pas nécessaire.

On constate que lorsque une résine d'ester de vinyle non préalablement traitée selon l'invention est mise en oeuvre pour réaliser un revêtement anti-acides sur un béton de ciment, d'énormes tensions apparaissent entre d'une part le substrat existant (béton) et d'autre part la couche d'ester de protection, dont les valeurs peuvent être exprimées comme suit :

- le module E de la résine d'ester vinylique, après durcissement, est d'environ 300 N/mm$^2$.

En supposant que la rétraction s'établisse après durcissement complet, et qu'en conséquence cette rétraction soit freinée par l'adhérence avec le substrat de béton, les tensions théoriques qui peuvent apparaître sont :

$$\sigma = \in E$$

$$\sigma = 0.08 \times 300 = 240 \text{ N/mm}^2.$$

Ceci entraîne inévitablement la délamination du revêtement de résine vinylique non traité de son substrat.

Dans la réalité cependant, la rétraction ne se produit qu'entre le début du durcissement (c'est-à-dire lors de la gélification) et le moment où l'on atteint le durcissement complet. En supposant la linéarité de la rétraction et du module d'élasticité, des tensions de l'ordre d'environ 13.6 N/mm$^2$ seraient atteintes dans la couche d'ester vinylique.

Si l'on considère que la limite de rupture à la traction de la résine d'ester vinylique est d'environ 15 N/mm$^2$, on observera que l'on se trouve avec des valeurs de 13.6 N/mm$^2$ très proches de cette limite élastique.

En revanche, dans le cas de la composition selon l'invention, la rétraction est réduite à 1 % maximum, ce qui réduit la tension lors du durcissement à environ 1.9 N/mm$^2$.

De plus, lors du durcissement, le styrène résiduel est réduit à un minimum, ce qui globalement, sur des durées prolongées, garantit une bien plus grande stabilité en comparaison aux compositions classiques.

Des essais de traction sur des revêtements selon l'invention appliqués sur un béton indiquent que systématiquement une rupture du substrat de béton avant son revêtement. Il convient de noter que par suite du module d'élasticité très faible de la résine de base d'ester vinylique, il est avantageux de charger la composition selon l'invention d'agents de charge adaptés en fonction du substrat à couvrir, de manière à ce que le produit final présente un module d'élasticité similaire à son substrat.

Le fait que le substrat et le revêtement présentent des propriétés de dilatation thermique très proches ou similaires, compte tenu des tensions de rétraction fortement réduites, garantit une adhérence mutuelle remarquable.

On a mesuré, pour le produit selon l'invention, les caractéristiques suivantes.

Tableau I.

| Propriétés physiques | Valeur numérique |
|---|---|
| A. Propriétés spécifiques des résines pures à 25 °C | |
| Masse spécifique | 1,10 |
| Viscosité Brookfield | 200 |
| Point éclair (°C) | 32 |
| Indice d'acide maximum | 11 |
| Teneur de styrène (%) | 40 |
| B. Propriétés d'une masse coulée claire à la température ordinaire | |
| Résistance à la compression (N/mm$^2$) | 127 |
| Résistance à la traction (N/mm$^2$) | 73 |
| Résistance à la flexion (N/mm$^2$) | 133 |
| Module de flexion (N/mm$^2$) | 3800 |
| Dureté Barcoll | 40 |
| Coefficient moyen de dilatation entre 25 et 100 °C (X / 1000000 cm / cm / °C) | 53 |
| Température de distorsion thermique (°C) | 145 |

La résine selon l'invention peut être appliquée en couverture sur des revêtements monolithiques.

L'application s'effectue de préférence dans les conditions opératoires suivantes :

- température de la zone de travail > 5 °C
- température du béton ou du matériau de couverture > 5 °C
- humidité relative < 70 %
- le point de rosée du matériau subissant le traitement doit être adapté (3 °C au-dessus du point de rosée)
- la surface de travail doit être sèche et libre de poussière
- d'autres contaminants tels que des produits de couverture antérieure, les graisses, les huiles, les cires, etc. doivent être soigneusement éliminés
- un nettoyage approprié préalable de la surface est bien entendu recommandable, tel que sablage, grattage, etc. en éliminant les matières résiduelles.

Le primer peut être appliqué aisément par toute technique appropriée, à la palette, à la brosse, au rouleau ou au pistolet.

La résine est ensuite appliquée de préférence sur un tel primer par des techniques appropriées à sa consistance. En particulier, lorsque la résine se présente sous forme d'un agrégat chargé de sable de silice et d'un retardateur de flamme (trihydrate d'alumine), l'application peut s'effectuer par truellage sous une épaisseur de l'ordre de 15 à 20 mm en fonction de la résistance requise.

Il est particulièrement recommandé d'appliquer un mat de fibres de verre de 300 g / m$^2$ entre le primer et l'application de résine. Les fibres de verre sont de préférence des fibres de 50 mm de long à orientation aléatoire. Il est avantageux de comprimer la résine humide à l'aide d'un rouleau pour imprégner la fibre de verre. Le mat de fibres de verre est appliqué sous forme de lés parallèles successifs de 120 mm avec des recouvrements de l'ordre de 50 mm aux joints. Eventuellement, des quantités supplémentaires de résine sont ajoutées pour humidifier complètement l'intégralité des fibres de verre. Lorsque touts les fibres de verre sont ainsi mouillées, la surface est travaillée à l'aide d'un rouleau ou d'un autre outil convenable pour éliminer toute bulle d'air captive.

Dans le tableau II qui suit, on a comparé les propriétés mécaniques de différents mortiers. La comparaison a porté d'une part sur un ciment Portland classique, sur un mortier d'époxy polyamide avec 4,5 parties de sable et sur un mortier selon l'invention avec 6 parties de sable (respectivement colonnes A, B et C).

Tableau II.

| Propriétés mécaniques de différents mortiers | | | |
|---|---|---|---|
| | A | B | C |
| Résistance à la compression $N/mm^2$ (psi) | | | |
| 1 jour | | 41 (6000) | 103 (15000) |
| 2 jours | 10 (1500) | 69 (10000) | |
| 7 jours | 24 (3500) | 90 (13000) | 110 (16000) |
| 28 jours | 31 (4500) | 97 (14000) | 117 (17000) |
| Résistance à la traction $N/mm^2$ (psi) | | | |
| 1 jour | | 8.3 (1200) | 20.7 (3000) |
| 2 jours | 1.4 (200) | 15.2 (2200) | |
| 7 jours | 2.1 (300) | 20.7 (3000) | 22.1 (3200) |
| 28 jours | 2.8 (400) | 22.1 (3200) | 22.8 (3300) |
| Résistance à la flexion $N/mm^2$ (psi) | | | |
| 1 jour | | | 34.5 (5000) |
| 7 jours | | 45.5 (6600) | 37.9 (5500) |
| 28 jours | | 45.5 (6600) | 41.4 (6000) |

### *Exemple 1*

Une résine DERAKANE® 470 est mélangée dans la proportion de 4 parties pour une partie de copolymère polybutadiène/styrène dans du styrène dans le rapport 20 / 70 (composition A).

Lors de sa mise en oeuvre, on y ajoute à raison de 1,5 à 3% un accélérateur (B) du type 1% cobalt dans un plastifiant de phtalate ou un accélérateur aminé du type 10% DMA, DEA ou DMP. Après mélange, on y ajoute à raison de 2% un durcisseur (C) qui est un catalyseur du type peroxyde de benzoyle, hydroperoxyde de cumène ou autre MEKP susmentionné.

La préparation peut être appliquée directement par tout moyen approprié (rouleau, brosse, ...) à raison de 350 $g/m^2$ sur une surface lisse et propre, par exemple en béton, constituant un mur, un sol ou encore un réservoir.

Après une durée de séchage (durcissement) de l'ordre d'une heure, la surface peut recevoir un mortier.

Ce mortier est préparé comme suit :

Dans un mélange de la composition A avec 2 % du durcisseur B, on verse dans un mélangeur du type Zyclos ou BEBA, à raison de 1 partie du mélange A + B, 9 parties du constituant C formé par un mélange lavé à l'acide et sec d'un granulat de sable de quartz. L'application de ce mortier, avec un lissage final, s'effectue selon les règles de l'art jusqu'à une épaisseur pouvant atteindre 10 mm en application verticale.

### *Exemple 2*

La composition A est identique à celle de l'exemple 1, à l'exception d'un ajout d'une quantité adéquate d'un agent thixotropique.

Après un temps de séchage d'environ une heure, un mortier est constitué cette fois en mélangeant une partie du mélange A + B susmentionné avec 4 parties de C.

Ce mortier peut être appliqué à l'aide d'une truelle ou d'une spatule et d'une plaque de lissage à raison d'une épaisseur allant jusqu'à 5 mm. Cependant, un égalisage d'irrégularités atteignant jusqu'à environ un creux de 15 mm peut être réalisé sans difficulté.

Il est possible, sur base du système proposé, de développer de nombreuses compositions adaptées aux divers usages.

Pour le revêtement du béton, des compositions de résines destinées à une application horizontale de respectivement 15, 10 et 5 mm peuvent être réalisées sous forme d'un mélange résine / sable de quartz dans un rapport pondéral 1/9, 1/7 et 1/5.

En application verticale de 5 mm d'épaisseur, le rapport recommandé et 1/4.

Il est possible également d'utiliser un mélange de résine et de composites de verre (paillettes ou mats de verre ou autre) dans un rapport 1/2, qui convient pour le revêtement du béton et du métal.

## Revendications

1. Procédé de protection de surfaces contre les matières corrosives, caractérisé en ce que l'on utilise une composition constituée d'un copolymère butadiène/ styrène opaque et résistant aux chocs en solution dans un solvant réactif auquel est mélangée à raison de 1 à 18 parties en poids une résine vinylique ou un polyester non-saturé pour une partie en poids de la solution de copolymère polybytadiène/styrène, en présence d'accélérateurs ou de catalyseurs.

2. Procédé selon la revendication 1, caractérisé en ce que ledit solvant est du styrène.

3. Procédé selon la revendication 1 ou 2, caractérisé en ce que la résine vinylique ou le polyester non saturé est mélangé à raison d'approximativement 4 parties en poids pour une partie en poids de la solution de copolymère polybutadiène/styrène.

4. Procédé selon l'une quelconque des revendications 1 à 3, caractérisé en ce que la solution de copolymère polybutadiène/styrène dans le solvant est d'une concentration telle que l'on obtienne une fluidité sirupeuse.

5. Procédé selon l'une quelconque des revendications 2 à 4, caractérisé en ce que le rapport copolymère polybutadiène/styrène au styrène est de l'ordre de 20 / 70.

6. Procédé selon l'une quelconque des revendications 1 à 5, caractérisé en ce que la composition contient des oxydes organiques, tels que le peroxyde de méthyl-éthyl-cétone (MEKP).

7. Procédé selon l'une quelconque des revendications 1 à 6, caractérisé en ce que la résine vinylique ou polyester est choisie parmi les compositions du commerce du type :

   - résines de type polyester dérivées d'orthophtalate ou d'isophtalate;
   - esters époxypolyvinyliques.

8. Procédé selon la revendication 7, caractérisé en ce que les esters époxyvinyliques sont des esters vinyliques à base de Novolac-époxy ou bisphénol-A-époxy ou encore bisphénol-A-époxy bromé et caoutchouc modifié - époxy.

9. Procédé selon l'une quelconque des revendications 1 à 7, caractérisé en ce que l'on utilise un mortier contenant une proportion de sable comprise entre 1 et 20 parties pour une partie de ladite composition.

10. Procédé selon la revendication 9, caractérisé en ce que ladite proportion de sable est comprise entre 4 et 9 parties pour une partie de ladite composition.

## Claims

1. Process for protecting surfaces against corrosive materials, characterized in that a composition produced with an opaque impact-resistant butadiene/styrene copolymer is used in a solution in a reactive solvent with which 1 to 18 parts in weight of a vinyl resin or an unsaturated polyester is(are) mixed for one part in weight of the solution of polybutediene/styrene copolymer in the presence of accelerators or catalysts.

2. Process according to claim 1, characterized in that said solvent comprises styrene.

3. Process according to claim 1 or 2, characterized in that the vinyl resin or the unsaturated polyester is mixed in a quantity of about 4 parts in weight for one part in weight of the solution of polybutadiene/styrene copolymer.

4. Process according to any of claims 1 to 3, characterized in that the solution of polybutadiene/styrene copolymer in the solvent is present in such a concentration that a sirup fluidity is obtained.

5. Process according to any of claims 2 to 4, characterized in that the ratio of the polybutadiene/styrene copolymer to the styrene is about 20/70.

6. Process according to any of claims 1 to 5, characterized in that the composition contains organic oxides, such as methylethylcetone peroxide (MEKP).

7. Process according to any of claims 1 to 6, characterized in that the vinyl resin or polyester is selected amongst the commercially available compositions such as :

   - polyester type resins derived from orthophthalate or isophthalate, and
   - epoxypolyvinyl esters.

8. Process according to claim 7, characterized in that the epoxyvinyl esters are vinyl esters based on Novolac-epoxy or bisphenol-A-epoxy or bromated bisphenol-A-epoxy and modified rubber-epoxy.

9. Process according to any of claims 1 to 7, characterized in that a mortar is used containing a quantity of sand comprised between 1 and 20 parts for one part of said composition.

10. Process according to claim 9, characterized in that said quantity of sand is comprised between 4 and 9 parts for one part of said composition.


**Patentansprüche**

1. Verfahren zum Schutz von Oberflächen vor korrosiven Materialien, dadurch gekennzeichnet, daß eine Zusammensetzung verwendet wird, die aus einem undurchsichtigen und stoßfesten, in einem reaktiven Lösungsmittel gelösten Butadien/Styrol-Copolymer besteht, zu dem 1 bis 18 Gewichtsteile eines Vinylharzes oder eines ungesättigten Polyesters auf 1 Gewichtsteil der Polybutadien/Styrol-Copolymer-Lösung bei Anwesenheit von Beschleunigern oder Katalysatoren zugemischt werden.

2. Verfahren gemäß Anspruch 1, dadurch gekennzeichnet, daß das Lösungsmittel Styrol ist.

3. Verfahren gemäß Anspruch 1 oder 2, dadurch gekennzeichnet, daß ungefähr 4 Gewichtsteile des Vinylharzes oder des ungesättigten Polyesters auf einen Gewichtsteil der Polybutadien/Styrol-Copolymer-Lösung zugemischt werden.

4. Verfahren gemäß irgendeinem der Ansprüche 1 bis 3, dadurch gekennzeichnet, daß die Polybutadien/Styrol-Copolymer-Lösung in dem Lösungsmittel eine solche Konzentration hat, daß eine sirupöse Fluidität erhalten wird.

5. Verfahren gemäß irgendeinem der Ansprüche 2 bis 4, dadurch gekennzeichnet, daß das Verhältnis Polybutadien/Styrol-Copolymer zu Styrol ungefähr 20/70 ist.

6. Verfahren gemäß irgendeinem der Ansprüche 1 bis 5, dadurch gekennzeichnet, daß die Zusammensetzung organische Oxide, wie zum Beispiel Methyläthylketonperoxid enthält.

7. Verfahren gemäß irgendeinem der Ansprüche 1 bis 6, dadurch gekennzeichnet, daß das Vinyl- oder Polyesterharz unter den im Handel erhältlichen Zusammensetzungen von dem Typ:

   - Harze vom Typ Polyester, abgeleitet von Orthophthalat oder Isophthalat;
   - Epoxypolyvinylester

   ausgewählt wird.

8. Verfahren gemäß Anspruch 7, dadurch gekennzeichnet, daß die Epoxyvinylester Vinylester auf der Basis von Novolak-Epoxy oder Diphenol-A-Epoxy oder bromiertem Diphenol-A-Epoxy und modifizierter Gummi-Epoxy sind.

9. Verfahren gemäß irgendeinem der Ansprüche 1 bis 7, dadurch gekennzeichnet, daß ein Mörtel verwendet wird, der zwischen 1 und 20 Teilen Sand lauf 1 Teil der Zusammensetzung enthält.

10. Verfahren gemäß Anspruch 9, dadurch gekennzeichnet, daß zwischen 4 und 9 Teilen Sand auf 1 Teil der Zusammensetzung verwendet werden.